(19) Europäisches Patentamt / European Patent Office / Office européen des brevets

(11) **EP 4 044 117 A1**

(12) **EUROPEAN PATENT APPLICATION**
published in accordance with Art. 153(4) EPC

(43) Date of publication:
**17.08.2022 Bulletin 2022/33**

(21) Application number: **20936648.3**

(22) Date of filing: **25.09.2020**

(51) International Patent Classification (IPC):
$G06T\ 7/277^{(2017.01)}$      $G06T\ 7/246^{(2017.01)}$
$G06K\ 9/62^{(2022.01)}$

(86) International application number:
**PCT/CN2020/117751**

(87) International publication number:
**WO 2021/232652 (25.11.2021 Gazette 2021/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.05.2020 CN 202010443892**

(71) Applicants:
• **Beijing Baidu Netcom Science and Technology Co., Ltd.**
**Beijing 100085 (CN)**

• **BEIJING BAIDU NETCOM SCIENCE TECHNOLOGY CO., LTD.**
**No. 10 Shangdi 10th Street**
**Haidian District**
**Beijing 100085 (CN)**

(72) Inventors:
• **SU, Xiangbo**
**Beijing 100085 (CN)**
• **YUAN, Yuchen**
**Beijing 100085 (CN)**
• **SUN, Hao**
**Beijing 100085 (CN)**

(74) Representative: **Studio Torta S.p.A.**
**Via Viotti, 9**
**10121 Torino (IT)**

(54) **TARGET TRACKING METHOD AND APPARATUS, ELECTRONIC DEVICE, AND COMPUTER-READABLE STORAGE MEDIUM**

(57) The present disclosure provides an object tracking method, an object tracking device, an electronic device and a computer-readable storage medium, and relates to the field of computer vision technology. The object tracking method includes: detecting an object in a current image, so as to obtain first information about an object detection box, the first information being used to indicate a first position and a first size; tracking the object through a Kalman filter, so as to obtain second information about an object tracking box in the current image, the second information being used to indicate a second position and a second size; performing fault-tolerant modification on a predicted error covariance matrix in the Kalman filter, so as to obtain a modified covariance matrix; calculating a Mahalanobis distance between the object detection box and the object tracking box in the current image in accordance with the first information, the second information and the modified covariance matrix; and performing a matching operation between the object detection box and the object tracking box in the current image in accordance with the Mahalanobis distance.

detecting an object in a current image, so as to obtain first information about an object detection box in the current image — 101

tracking the object through a Kalman filter, so as to obtain second information about an object tracking box in the current image — 102

performing fault-tolerant modification on a predicted error covariance matrix in the Kalman filter, so as to obtain a modified covariance matrix — 103

calculating a Mahalanobis distance between the object detection box and the object tracking box in the current image in accordance with the first information, the second information and the modified covariance matrix — 104

performing a matching operation between the object detection box and the object tracking box in the current image in accordance with the Mahalanobis distance — 105

**FIG. 1**

**Description**

**CROSS-REFERENCE TO RELATED APPLICATION**

This application claims a priority of the Chinese patent application No. 202010443892.8 filed on May 22, 2020, which is incorporated herein by reference in its entirety.

**TECHNICAL FIELD**

The present disclosure relates to the field of artificial intelligence, in particular to the field of computer vision technology.

**BACKGROUND**

In the related art, in order to track an object in a real-time video stream, all object detection boxes in a current image are extracted through a detector, and then the object detection boxes are associated with an existing trajectory, so as to obtain a new trajectory of the object in the current image. However, when a movement state of the object changes dramatically, e.g., when the object remains stationary for a long time period and then moves suddenly, or the object enters a stationary state suddenly during the movement, or a movement speed of the object changes obviously, it is impossible to match the object detection box with the existing trajectory successfully, and at this time, the tracking operation may fail.

**SUMMARY**

An object of the present disclosure is to provide an object tracking method, an object tracking device, an electronic device, and a computer-readable storage medium, so as to solve the problem in the related art where the tracking easily fails when the movement state of the object changes dramatically.
In order to solve the above-mentioned technical problem, the present disclosure provides the following technical solutions.
In a first aspect, the present disclosure provides in some embodiments an object tracking method, including: detecting an object in a current image, so as to obtain first information about an object detection box in the current image, the first information being used to indicate a first position and a first size; tracking the object through a Kalman filter, so as to obtain second information about an object tracking box in the current image, the second information being used to indicate a second position and a second size; performing fault-tolerant modification on a predicted error covariance matrix in the Kalman filter, so as to obtain a modified covariance matrix; calculating a Mahalanobis distance between the object detection box and the object tracking box in the current image in accordance with the first information, the second information and the modified covariance matrix; and performing a matching operation between the object detection box and the object tracking box in the current image in accordance with the Mahalanobis distance.
In this regard, the Mahalanobis distance between the object detection box and the object tracking box is calculated in accordance with the modified predicted error covariance matrix, and the Mahalanobis distance is maintained within an appropriate range even when a movement state of the object changes dramatically. As a result, when performing a matching operation between the object detection box and the object tracking box in the current image in accordance with the Mahalanobis distance, it is able to enhance the robustness when tracking the object in different movement states. In a second aspect, the present disclosure provides in some embodiments an object tracking device, including: a detection module configured to detect an object in a current image, so as to obtain first information about an object detection box in the current image, the first information being used to indicate a first position and a first size; a tracking module configured to track the object through Kalman filter, so as to obtain second information about an object tracking box in the current image, the second information being used to indicate a second position and a second size; a modification module configured to perform fault-tolerant modification on a predicted error covariance matrix in the Kalman filter, so as to obtain a modified covariance matrix; a first calculation module configured to calculate a Mahalanobis distance between the object detection box and the object tracking box in the current image in accordance with the first information, the second information and the modified covariance matrix; and a matching module configured to perform matching on the object detection box and the object tracking box in the current image in accordance with the Mahalanobis distance. In a third aspect, the present disclosure provides in some embodiments an electronic device, including at least one processor, and a memory in communication with the at least one processor. The memory is configured to store therein an instruction to be executed by the at least one processor, and the instruction is executed by the at least one processor so as to implement the above-mentioned object tracking method.
In a fourth aspect, the present disclosure provides in some embodiments a non-transitory computer-readable storage medium storing therein a computer instruction. The computer instruction is executed by a computer so as to implement the above-mentioned object tracking method.

The present disclosure has the following advantages or beneficial effects. The Mahalanobis distance between the object detection box and the object tracking box is calculated in accordance with the modified predicted error covariance matrix, and the Mahalanobis distance is maintained within an appropriate range even when a movement state of the object changes dramatically. As a result, when performing matching operation between the object detection box and the object tracking box in the current image in accordance with the Mahalanobis distance, it is able to enhance the robustness when tracking the object in different movement states. To be specific, the object is detected in the current image so as to obtain the first information about the object detection box in the current image, and the first information is used to indicate the first position and the first size. Next, the object is tracked through Kalman filter so as to obtain the second information about the object tracking box in the current image, and the second information is used to indicate the second position and the second size. Next, fault-tolerant modification is performed on the predicted error covariance matrix in the Kalman filter, so as to obtain the modified covariance matrix. Next, the Mahalanobis distance between the object detection box and the object tracking box in the current frame is calculated in accordance with the first information, the second information and the object tracking box. Then, the object detection box in the current image is matched with the object tracking box in accordance with the Mahalanobis distance. In this way, it is able to solve the problem in the related art where the tracking easily fails when the movement state of the object changes dramatically, thereby to enhance the robustness when tracking the object in different movement states.

The other effects will be described in the following in conjunction with the embodiments.

## BRIEF DESCRIPTION OF THE DRAWINGS

The following drawings are provided to facilitate the understanding of the present disclosure, but shall not be construed as limiting the present disclosure. In these drawings,

FIG. 1 is a flow chart of an object tracking method according to one embodiment of the present disclosure;
FIG. 2 is a flow chart of an object tracking procedure according to one embodiment of the present disclosure;
FIG. 3 is a block diagram of a tracking device for implementing the object tracking method according to one embodiment of the present disclosure; and
FIG. 4 is a block diagram of an electronic device for implementing the object tracking method according to one embodiment of the present disclosure.

## DETAILED DESCRIPTION

In the following description, numerous details of the embodiments of the present disclosure, which should be deemed merely as exemplary, are set forth with reference to accompanying drawings to provide a thorough understanding of the embodiments of the present disclosure. Therefore, those skilled in the art will appreciate that modifications or replacements may be made in the described embodiments without departing from the scope and spirit of the present disclosure. Further, for clarity and conciseness, descriptions of known functions and structures are omitted.

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device.

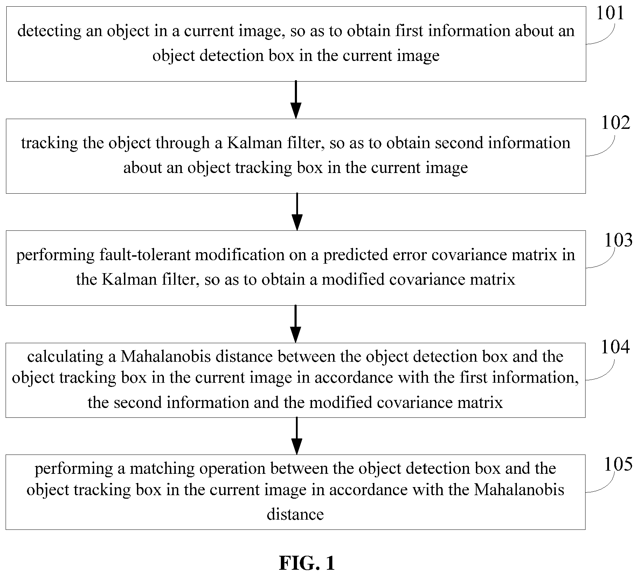

As shown in FIG. 1, the present disclosure provides in some embodiments an object tracking method for an electronic device, which includes the following steps.

Step 101: detecting an object in a current image, so as to obtain first information about an object detection box in the current image.

In the embodiments of the present disclosure, the first information is used to indicate a first position and a first size, i.e., position information (e.g., coordinate information) and size information about the object in the corresponding object detection box. For example, the first information is expressed as $(x, y, w, h)$, where x represents an x-axis coordinate of an upper left corner of the object detection box, y represents a y-axis coordinate of the upper left corner of the object detection box, w represents a width of the object detection box, and h represents a height of the object detection box. Further, x, y, w and h are in units of pixel, and correspond to a region of the image where the object is located.

In a possible embodiment of the present disclosure, the detecting the object in the current image includes inputting the current image into an object detection model (also called as an object detector), so as to obtain the first information about the object detection box in the current image. It should be appreciated that, the quantity of the detected object detection boxes is plural, i.e., a series of object detection boxes are obtained, and each object detection box includes the coordinate information and the size information about the corresponding object. The object detection model is trained through an existing deep learning method, e.g., a Single Shot Multi Box Detector (SSD) model, a Single-Short Refinement Neural Network for Object Detection (RefineDet) model, a MobileNet based Single Shot Multi Box Detector (MobileNet-SSD) model, or a You Only Look Once: Unified, Real-Time Object Detection (YOLO) model.

In a possible embodiment of the present disclosure, when the object is detected through the object detection model and the object detection model is obtained through training a pre-processed image, before detecting the object in the current image, the current image needs to be pre-processed. For example, the current image is zoomed in or out to obtain a fixed size (e.g., 512*512) and a uniform RGB average (e.g., [104, 117, 123]) is subtracted therefrom, so as to ensure that the current image is consistent with a train sample in the model training procedure, thereby to enhance the model robustness.

In another possible embodiment of the present disclosure, the current image is an image in a real-time video stream collected by a surveillance camera or a camera in any other scenario, and the object is a pedestrian or vehicle.

Step 102: tracking the object through a Kalman filter, so as to obtain second information about an object tracking box in the current image.

In the embodiments of the present disclosure, the second information is used to indicate a second position and a second size, i.e., position information (e.g., coordinate information) and size information about the object in the corresponding object tracking box. For example, the second information is expressed as (x, y, w, h), where x represents an x-axis coordinate of an upper left corner of the object tracking box, y represents a y-axis coordinate of the upper left corner of the object tracking box, w represents a width of the object tracking box, and h represents a height of the object tracking box. Further, x, y, w and h are in units of pixel, and correspond to a region of the image where the object is located.

The tracking the object through the Kalman filter may be understood as predicting a possible position and a possible size of the object in the current image in accordance with an existing movement state of an object trajectory. The object trajectory represents all the object detection boxes belonging to a same object in several images before the current image. Each object trajectory corresponds to one Kalman filter. The Kalman filter is initialized in accordance with the object detection box where the object occurs for the first time, and after the matching has been completed for each image, the Kalman filter is modified in accordance with the matched object detection box. For a new image (e.g., the current image), the Kalman filters for all the stored object trajectories are predicted, so as to obtain a predicted position of the object trajectory in the current image and a predicted error covariance matrix $\Sigma$ in the Kalman filter. The predicted error covariance matrix $\Sigma$ is a 4*4 matrix, and it is used to describe an error covariance between a predicted value and a true value in the object tracking.

Step 103: performing fault-tolerant modification on a predicted error covariance matrix in the Kalman filter, so as to obtain a modified covariance matrix.

Step 104: calculating a Mahalanobis distance between the object detection box and the object tracking box in the current image in accordance with the first information, the second information and the modified covariance matrix.

It should be appreciated that, a main object of the fault-tolerant modification on the predicted error covariance matrix in the Kalman filter is to improve a formula for calculating the Mahalanobis distance, so as to maintain the Mahalanobis distance between the object detection box and the object tracking box obtained through the improved formula within an appropriate range even when a movement state of the object changes dramatically. A mode for the fault-tolerant modification may be set according to the practical need, and thus will not be particularly defined herein.

Step 105: performing a matching operation between the object detection box and the object tracking box in the current image in accordance with the Mahalanobis distance. In a possible embodiment of the present disclosure, in Step 105, the matching on the object detection box and the object tracking box may be performed through an image matching algorithm such as Hungarian algorithm, so as to obtain several pairs of object detection boxes and object tracking boxes. In each pair, the object detection box and the object tracking box belong to a same object trajectory and a same object, and a uniform object Identity (ID) may be assigned. After the matching operation, a new object trajectory in the current image may be obtained, including updating an existing object trajectory, cancelling the existing object trajectory and/or adding a new object trajectory.

In a possible embodiment of the present disclosure, in Step 105, a matching procedure may include: when the Mahalanobis distance is smaller than or equal to a predetermined threshold, determining that the object detection box matches the object tracking box; or when the Mahalanobis distance is greater than the predetermined threshold, determining that the object detection box does not match the object tracking box. In other words, the smaller the Mahalanobis distance between the object detection box and the object tracking box, the larger the probability that the object detection box and the object tracking box belong to a same object. Hence, the matching is performed through comparing the distance information with the predetermined threshold, so as to simplify the matching procedure.

According to the object tracking method in the embodiments of the present disclosure, the Mahalanobis distance between the object detection box and the object tracking box is calculated in accordance with the modified predicted error covariance matrix, and the Mahalanobis distance is maintained within an appropriate range even when a movement state of the object changes dramatically. As a result, when performing matching operation between the object detection box and the object tracking box in the current image in accordance with the Mahalanobis distance, it is able to enhance the robustness when tracking the object in different movement states.

In multi-object tracking, a formula for calculating the Mahalanobis distance in the related art is expressed as

$$D_{\mathrm{M}}(X,\ \mu) = \sqrt{(X-\mu)^T \Sigma^{-1}(X-\mu)}$$

, where $\mu$ represents an average value (x, y, w, h) of the Kalman filter, i.e., coordinates, width and height of a predicted object (i.e., the object tracking box) in the current image, $\Sigma$ represents the predicted error covariance matrix in the Kalman filter, X represents coordinates, width and height of the object detection box in the current image, i.e., a variable describing an actual movement state (x, y, w, h) of an object. When an object is maintained in a same movement state within a certain time period (e.g., when the object is maintained in a stationary state within a long time period or maintained at a same movement speed within a long time period), the covariance matrix $\Sigma$ in the Kalman filter is small, and $\Sigma^{-1}$ is larger, i.e., there is a small offset between the predicted value and the true value, and it is predicted that the object tends to be maintained in the original movement state within a next frame. When the object is maintained in the original state, i.e., (X-$\mu$) approaches to 0, the Mahalanobis distance $D_{\mathrm{M}}$ may have a small value in the case that $\Sigma^{-1}$ is large. When the movement state of the object changes dramatically, a value of (X-$\mu$) increases, and the Mahalanobis distance $D_{\mathrm{M}}$ may have an extremely large value in the case that $\Sigma^{-1}$ is large, so a matching error may occur subsequently. When the Mahalanobis distance $D_{\mathrm{M}}$ is greater than the predetermined threshold, the object detection box X may be considered as not belonging to the trajectory corresponding to the Kalman filter, and at this time, the tracking may fail.

In a possible embodiment of the present disclosure, in S104, the Mahalanobis distance between the object detection box and the object tracking box in the current image is calculated through

$$D_{\mathrm{Mnew}}(X,\ \mu) = \sqrt{(X-\mu)^T(\Sigma+\alpha E)^{-1}(X-\mu)}$$

, where X represents the first information about the object detection box in teh current image (e.g., it includes position information and size information, and it is expressed as (x, y, w, h)), $\mu$ represents the second information about the object tracking box in the current image obtained through the Kalman filter (e.g., it includes position information and size information, and it is expressed as (x, y, w, h)), $\Sigma$ represents the predicted error covariance matrix in the Kalman filter, ($\Sigma + \alpha E$) represents teh modified covariance matrix, $\alpha$ represents a predetermined coefficient greater than 0, and E represents a unit matrix.

Through analyzing the above-mentioned improved formula for calculating the Mahalanobis distance, when $\alpha$>0, there are the following inequalities: $\Sigma < \Sigma + \alpha E$ (1), $\Sigma^{-1} > (\Sigma + \alpha E)^{-1}$ (2), and

$$\sqrt{(X-\mu)^T \Sigma^{-1}(X-\mu)} > \sqrt{(X-\mu)^T(\Sigma+\alpha E)^{-1}(X-\mu)} \quad (3).$$

Based on the inequality (3), $D_{\mathrm{M}}(X, \mu) > D_{\mathrm{Mnew}}(X, \mu)$.

In addition, there are also the following inequalities: $\alpha\Sigma < \Sigma + \alpha E$ (4), $(\alpha\Sigma)^{-1} > (\Sigma + \alpha E)^{-1}$ (5),

$$\sqrt{(X-\mu)^T(\alpha\Sigma)^{-1}(X-\mu)} > \sqrt{(X-\mu)^T(\Sigma+\alpha E)^{-1}(X-\mu)}$$

and

$$\sqrt{\alpha}\,|X-\mu| > \sqrt{(X-\mu)^T(\Sigma+\alpha E)^{-1}(X-\mu)} \quad (7).$$

Based on the inequality (7), $D_{\mathrm{Mnew}}(X,\ \mu) < \sqrt{\alpha}\,|X-\mu|$.

In other words, for any X, $D_{\mathrm{Mnew}} < D_{\mathrm{M}}$, and the smaller the value of $\Sigma$, the larger the difference therebetween. When an object is maintained in in the original movement state, i.e., (X-$\mu$) approaches to 0, a value of $D_{\mathrm{Mnew}}$ is relatively small as compared with a value of $D_{\mathrm{M}}$. When the movement state of the object changes dramatically, the value of (X-$\mu$) increases, but the value of $D_{\mathrm{Mnew}}$ is constrained to a smaller value as compared with the value of $D_{\mathrm{M}}$.

Hence, through the above-mentioned improved formula for calculating the Mahalanobis distance, the Mahalanobis distance is maintained within an appropriate range even when a movement state of the object changes dramatically. As a result, it is able to enhance the robustness when tracking the object in different movement states. In the embodiments of the present disclosure, in order to increase the matching accuracy, on the basis of the Mahalanobis distance, a similarity matching matrix may be generated in accordance with an appearance feature similarity and a contour similarity in a similarity measurement method that is used to assist the matching, and then the matching may be performed in accordance with the similarity matching matrix. In a possible embodiment of the present disclosure, subsequent to Step 104, the object tracking method further includes: calculating a distance similarity matrix $M_{\mathrm{D}}$ in accordance with the Mahalanobis distance, a value in an $i^{\mathrm{th}}$ row and a $j^{\mathrm{th}}$ column in $M_{\mathrm{D}}$ representing a distance similarity between an $i^{\mathrm{th}}$ object tracking box and a $j^{\mathrm{th}}$ object detection box in the current image (for example, the distance similarly is a reciprocal of the Mahalanobis distance $D_{Mnew}$ between the $i^{th}$ object tracking box and the $j^{th}$ object detection box, i.e., $D_{Mnew}^{-1}$, or a value obtained after processing the Mahalanobis distance $D_{Mnew}$ in any other way, as long as the similarity has been reflected); calculating an appearance depth feature similarly matrix $M_A$, a value in an $i^{th}$ row and a $j^{th}$ column in MA representing a cosine similarity $\cos(F_i, F_j)$ between an appearance depth feature Fi of the $i^{th}$ object tracking box in a previous image and an appearance depth feature $F_j$ of the $j^{th}$ object detection box (the appearance depth feature F may be extracted from the image through a depth convolutional neural network, e.g., ResNet); and determining a similarity matching matrix in accordance with $M_D$ and $M_A$.

Step 105 includes performing a matching operation between the object detection box and the object tracking box in the current image in accordance with the similarity matching matrix.

In a possible embodiment of the present disclosure, the similarity matching matrix is obtained through fusing $M_D$ and MA in a weighted average manner. For example, the similarity matching matrix is equal to $aM_D+bM_A$, where a and b are weights of $M_D$ and $M_A$, and they are preset according to the practical need.

In another possible embodiment of the present disclosure, when performing a matching operation between the object detection box and the object tracking box in the current image in accordance with the similarity matching matrix, bipartite graph matching operation is performed through a Hungarian algorithm, so as to obtain a matching result between each object detection box and a corresponding object tracking box.

It should be appreciated that, in multi-object tracking, there may exist such a condition where one object is seriously shielded by another object. When a majority of an object far away from a camera is shielded by an object close to the camera, an object tracking error may occur, and thereby an erroneous tracking result may be obtained in a subsequent image. In order to solve this problem, in the embodiments of the present disclosure, constrained matching operation is performed in accordance with a topological relationship between two objects one located in front of the other.

Due to the existence of a perspective relation, in an image collected by a photographing device (e.g., a camera), a center of a lower edge of an object detection box for a ground object may be considered as a ground point of the object. The closer the ground point to a lower edge of the image, the closer the object to the camera, and vice versa. When an Intersection over Union (IoU) between two object detection boxes is greater than a predetermined threshold, one object may be considered to be seriously shielded by the other. The front-and-back relationship between the two objects may be determined in accordance with the position of the ground point of each object. The object closer to the camera is a foreground shielding object, while the object further away from the camera is a background shielded object. The front-and-back relationship between the two objects may be called as a front-and-back topological relationship between the objects. The topological consistency is defined as follows. In consecutive frames (images), when in a previous frame an object B, a background shielded object, is seriously shielded by an object A, a foreground shielding object, in a current frame, the object A is still the foreground shielding object and the object B is still the background shielded object if one object is still seriously shielded by the other. When the serious shielding condition occurs for a plurality of objects in the current image, the front-and-back topological relationship among the object trajectories in the previous frame may be obtained, and then the matching may be constrained in accordance with the topological relationship, so as to improve the matching accuracy.

In a possible embodiment of the present disclosure, subsequent to Step 105, the object tracking method further includes: obtaining a topological relation matrix $M_{T1}$ for the current image and a topological relation matrix $M_{T2}$ for a previous image of the current image; multiplying $M_{T1}$ by $M_{T2}$ on an element-by-element basis, so as to obtain a topological change matrix Mo; and modifying a matching result of the object detection box in the current image in accordance with $M_0$.

A value in an $i^{th}$ row and an $j^{th}$ column in $M_{T1}$ represents a front-and-back relationship between an $i^{th}$ object and a $j^{th}$ object in the current image, a value in an $i^{th}$ row and a $j^{th}$ column in $M_{T2}$ represents a front-and-back relationship between an $i^{th}$ object and a $j^{th}$ object in the previous image, and a value in an $i^{th}$ row and a $j^{th}$ column in $M_0$ represents whether the front-and-back relationship between the $i^{th}$ object and the $j^{th}$ object in the current image changes relative to the previous image. The modification may be understood as, when the front-and-back relationship between the $i^{th}$ object and the $j^{th}$ object has changed in the previous image and the current image, the object detection box for the $i^{th}$ object and the object detection box for the $j^{th}$ object may be replaced with each other, so as to modify the matching result in the object tracking operation.

In this way, through the constraint using the topological consistency between the objects in adjacent images, it is able to improve the matching reliability when one object is seriously shielded by the other object, thereby to facilitate the object tracking operation. For example, when obtaining $M_{T1}$ and $M_{T2}$, a center $(x+w/2, y+h)$ of a lower edge of the object detection box is taken as a ground point of a corresponding object. Depending on a perspective principle, the larger a value of y+h, the closer the object to the camera, and vice versa. When the front-and-back relationship between the two objects is determined, a y-axis coordinate of a center of a lower edge of one object detection box may be compared with that of the other object detection box. For example, taking $M_{T1}$ as an example, the value in the $i^{th}$ row and the $j^{th}$ column represents a front-and-back relationship t between the $i^{th}$ object and the $j^{th}$ object in the current image. When one of the $i^{th}$ object and the $j^{th}$ object is shielded by the other and $y_i+h_i<y_j+h_j$, t=-1, and it represents that the $i^{th}$ object is located in front of the $j^{th}$ object. Alternatively, when one of the $i^{th}$ object and the $j^{th}$ object is shielded by the other and yi+hi>yj+h, t=1, and it represents that the $i^{th}$ object is located at the back of the $j^{th}$ object. Alternatively, when one of the $i^{th}$ object and the $j^{th}$ object is not shielded by the other, t=0. For $M_{T2}$, it may be set in a way similar to $M_{T1}$. In this way, in the topological change matrix $M_0$ obtained through multiplying $M_{T1}$ by $M_{T2}$ on an element-by-element basis, when the matching operation has been performed successfully on the $i^{th}$ object and the $j^{th}$ object, the value in the $i^{th}$ row and the $j^{th}$ column in $M_0$ is 0 or 1, i.e., the front-and-back relationship between the $i^{th}$ object and the $j^{th}$ object does not change. When the value in the $i^{th}$ row and the $j^{th}$ column in $M_0$ is -1, a matching error occurs, and the front-and-back relationship between the $i^{th}$ object and the $j^{th}$ object has changed in two adjacent images. At this time, the object detection boxes matched for the two objects in the current image may be exchanged with each other, so as to modify the corresponding object trajectories, and facilitate the subsequent tracking operation.

In a possible embodiment of the present disclosure, whether one of the two objects is shielded by the other may be determined in accordance with the IoU between the object detection box and the object tracking box.

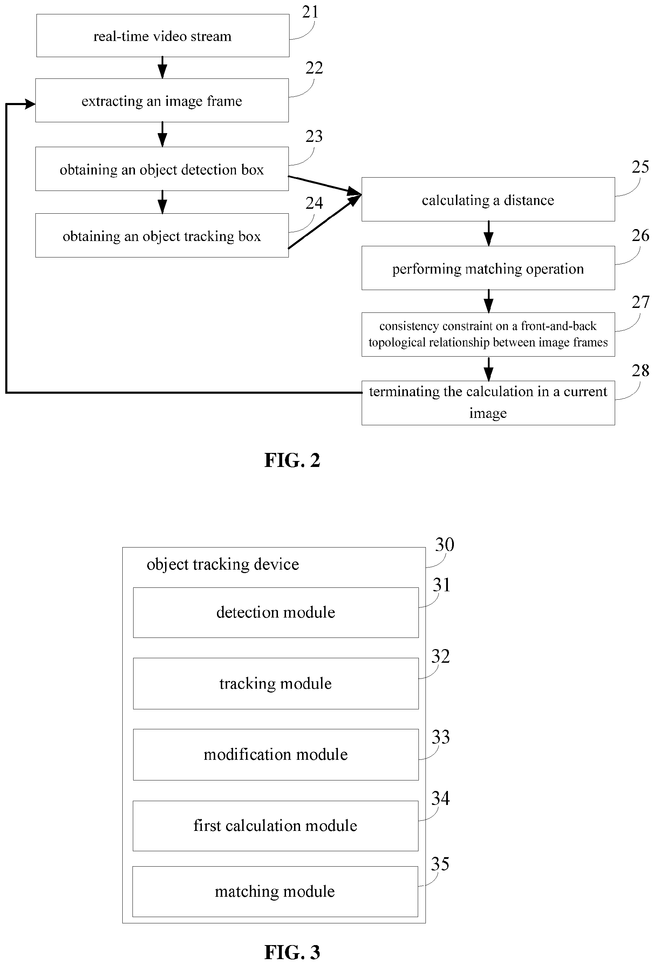

The object tracking method in the embodiments of the present disclosure may be used to, but not limited to, continuously tracking such an object as pedestrian and/or vehicle in such scenarios as smart city, smart traffic, smart retail, so as to obtain information such as a position, an identity, a movement state and a historical trajectory of the object. The object tracking procedure will be described hereinafter in conjunction with FIG. 2. As shown in FIG. 2, the object tracking procedure includes the following steps.

S21: obtaining a real-time video stream collected by a surveillance camera or a camera in any other scenario.

S22: extracting a current image from the real-time video stream, and pre-processing the current image, e.g., zooming in or out the current image to obtain a fixed size and subtracting a uniform RGB average therefrom.

S23: inputting the pre-processed current image into a predetermined object detector, and outputting a series of object detection boxes, each object detection box including coordinate information and size information about an object.

S24: tracking the object through the Kalman filter, so as to obtain coordinate information and size information about the object in an object tracking box in the current image.

S25: calculating a Mahalanobis distance between the object detection box and the object tracking box in the current image through the improved formula for calculating the Mahalanobis distance, which may refer to that mentioned hereinabove.

S26: performing matching operation, e.g., bipartite graph matching through a Hungarian algorithm, on the object detection box and the object tracking box in the current image in accordance with the Mahalanobis distance obtained in S25.

S27: performing consistency constraint on a matching result in accordance with a front-and-back topological relationship between the objects in adjacent images.

S28: terminating a tracking procedure in the current image, extracting a next image, and repeating a procedure from S22 to S27 until the video stream has ended. An object trajectory which has been recorded but fails to match any object detection box within a certain time period (i.e., in several images/image frames) may be marked as departure, and may not participate in the matching in future any more.

As shown in FIG. 3, the present disclosure provides in some embodiments an object tracking device 30, which includes: a detection module 31 configured to detect an object in a current image, so as to obtain first information about an object detection box in the current image, the first information being used to indicate a first position and a first size; a tracking module 32 configured to track the object through Kalman filter, so as to obtain second information about an object tracking box in the current image, the second information being used to indicate a second position and a second size; a modification module 33 configured to perform fault-tolerant modification on a predicted error covariance matrix in the Kalman filter, so as to obtain a modified covariance matrix; a first calculation module 34 configured to calculate a Mahalanobis distance between the object detection box and the object tracking box in the current image in accordance with the first information, the second information and the modified covariance matrix; and a matching module 35 configured to perform matching on the object detection box and the object tracking box in the current image in accordance with the Mahalanobis distance.

In a possible embodiment of the present disclosure, the first calculation module 34 is further configured to calculate the Mahalanobis distance between the object detection box and the object tracking box in the current image through $D_{\text{Mnew}}(X, \mu) = \sqrt{(X-\mu)^T (\Sigma + \alpha E)^{-1}(X-\mu)}$, where X represents the first information, $\mu$ represents the second information, $\Sigma$ represents the predicted error covariance matrix in the Kalman filter, $(\Sigma + \alpha E)$ represents teh modified covariance matrix, $\alpha$ represents a predetermined coefficient greater than 0, and E represents a unit matrix.

In a possible embodiment of the present disclosure, the matching module 35 is further configured to: when the Mahalanobis distance is smaller than or equal to a predetermined threshold, determine that the object detection box matches the object tracking box; or when the Mahalanobis distance is greater than the predetermined threshold, determine that the object detection box does not match the object tracking box.

In a possible embodiment of the present disclosure, the object tracking device 30 further includes: an obtaining module configured to obtain a topological relation matrix $M_{T1}$ for the current image and a topological relation matrix $M_{T2}$ for a previous image of the current image; a second calculation module configured to multiply $M_{T1}$ by $M_{T2}$ on an element-by-element basis, so as to obtain a topological change matrix Mo; and a processing module configured to modify a matching result of the object detection box in the current image in accordance with $M_0$, wherein a value in an $i^{th}$ row and an $j^{th}$ column in $M_{T1}$ represents a front-and-back relationship between an $i^{th}$ object and a $j^{th}$ object in the current image, a value in an $i^{th}$ row and a $j^{th}$ column in $M_{T2}$ represents a front-and-back relationship between an $i^{th}$ object and a $j^{th}$ object in the previous image, and a value in an $i^{th}$ row and a $j^{th}$ column in $M_0$ represents whether the front-and-back relationship between the $i^{th}$ object and the $j^{th}$ object in the current image changes relative to the previous image.

In a possible embodiment of the present disclosure, the object tracking device 30 further includes: a third calculation module configured to calculate a distance similarity matrix $M_D$ in accordance with the Mahalanobis distance, a value in an $i^{th}$ row and a $j^{th}$ column in $M_D$ representing a distance similarity between an $i^{th}$ object tracking box and a $j^{th}$ object detection box in the current image; a fourth calculation module configured to calculate an appearance depth feature similarly matrix $M_A$, a value in an $i^{th}$ row and a $j^{th}$ column in MA representing a cosine similarity between an appearance depth feature of the $i^{th}$ object tracking box in a previous image and an appearance depth feature of the $j^{th}$ object detection box; and a determination module configured to determine a similarity matching matrix in accordance with $M_D$ and MA. The matching module 35 is further configured to perform matching on the object detection box and the object tracking box in the current image in accordance with the similarity matching matrix. It should be appreciated that, the object tracking device 30 in the embodiments of the present disclosure is capable of implementing the steps in the above-mentioned method as shown in FIG. 1 with a same beneficial effect, which will not be particularly defined herein.

The present disclosure further provides in some embodiments an electronic device and a computer-readable storage medium.

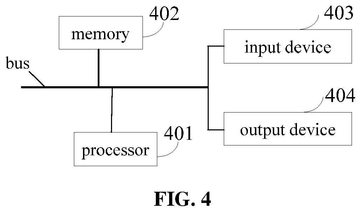

FIG. 4 is a schematic block diagram of an exemplary electronic device in which embodiments of the present disclosure may be implemented. The electronic device is intended to represent all kinds of digital computers, such as a laptop computer, a desktop computer, a work station, a personal digital assistant, a server, a blade server, a main frame or other suitable computers. The electronic device may also represent all kinds of mobile devices, such as a personal digital assistant, a cell phone, a smart phone, a wearable device and other similar computing devices. The components shown here, their connections and relationships, and their functions, are meant to be exemplary only, and are not meant to limit implementations of the present disclosure described and/or claimed herein.

As shown in FIG. 4, the electronic device may include one or more processors 401, a memory 402, and interfaces for connecting the components. The interfaces may include high-speed interfaces and low-speed interfaces. The components may be interconnected via different buses, and installed on a public motherboard or installed in any other mode according to the practical need. The processor is configured to process instructions to be executed in the electronic device, including instructions stored in the memory and used for displaying graphical user interface (GUI) pattern information on an external input/output device (e.g., a display device coupled to an interface). In some other embodiments of the present disclosure, if necessary, a plurality of processors and/or a plurality of buses may be used together with a plurality of memories. Identically, a plurality of electronic devices may be connected, and each electronic device is configured to perform a part of necessary operations (e.g., as a server array, a group of blade serves, or a multi-processor system). In FIG. 4, one processor 401 is taken as an example.

The memory 402 may be just a non-transitory computer-readable storage medium in the embodiments of the present disclosure. The memory is configured to store therein instructions capable of being executed by at least one processor, so as to enable the at least one processor to execute the above-mentioned object tracking method. In the embodiments of the present disclosure, the non-transitory computer-readable storage medium is configured to store therein computer instructions, and the computer instructions may be used by a computer to implement the above-mentioned object tracking method.

As a non-transitory computer-readable storage medium, the memory 402 may store therein non-transitory software programs, non-transitory computer-executable programs and modules, e.g., program instructions/modules corresponding to the above-mentioned object tracking method (e.g., the detection module 31, the tracking module 32, the modification module 33, the first calculation module 34, and the matching module 35 in FIG. 3). The processor 401 is configured to execute the non-transitory software programs, instructions and modules in the memory 402, so as to execute various functional applications of a server and data processings, i.e., to implement the above-mentioned object tracking method.

The memory 402 may include a program storage area and a data storage area. An operating system and an application desired for at least one function may be stored in the program storage area, and data created in accordance with the use of the electronic device for implementing the event extraction method may be stored in the data storage area. In addition, the memory 402 may include a high-speed random access memory, or a non-transitory memory, e.g.,

at least one magnetic disk memory, a flash memory, or any other non-transitory solid-state memory. In some embodiments of the present disclosure, the memory 402 may optionally include memories arranged remotely relative to the processor 401, and these remote memories may be connected to the electronic device for implementing the event extraction method via a network. Examples of the network may include, but not limited to, Internet, Intranet, local area network, mobile communication network or a combination thereof.

The electronic device for implementing the object tracking method may further include an input device 403 and an output device 404. The processor 401, the memory 402, the input device 403 and the output device 404 may be coupled to each other via a bus or connected in any other way. In FIG. 4, they are coupled to each other via the bus. The input device 403 may receive digital or character information, and generate a key signal input related to user settings and function control of the electronic device for implementing the event extraction method. For example, the input device 403 may be a touch panel, a keypad, a mouse, a trackpad, a touch pad, an indicating rod, one or more mouse buttons, a trackball or a joystick. The output device 404 may include a display device, an auxiliary lighting device (e.g., light-emitting diode (LED)) or a haptic feedback device (e.g., vibration motor). The display device may include, but not limited to, a liquid crystal display (LCD), an LED display or a plasma display. In some embodiments of the present disclosure, the display device may be a touch panel. Various implementations of the aforementioned systems and techniques may be implemented in a digital electronic circuit system, an integrated circuit system, a field programmable gate array (FPGA), an application specific integrated circuit (ASIC), an application specific standard product (ASSP), a system on a chip (SOC), a complex programmable logic device (CPLD), a computer hardware, a firmware, a software, and/or a combination thereof. The various implementations may include an implementation in form of one or more computer programs. The one or more computer programs may be executed and/or interpreted on a programmable system including at least one programmable processor. The programmable processor may be a special purpose or general purpose programmable processor, may receive data and instructions from a storage system, at least one input device and at least one output device, and may transmit data and instructions to the storage system, the at least one input device and the at least one output device.

These computer programs (also called as programs, software, software application or codes) may include machine instructions for the programmable processor, and they may be implemented using an advanced process and/or an object oriented programming language, and/or an assembly/machine language. The terms "machine-readable medium" and "computer-readable medium" used in the context may refer to any computer program products, devices and/or devices (e.g., magnetic disc, optical disc, memory or programmable logic device (PLD)) capable of providing the machine instructions and/or data to the programmable processor, including a machine-readable medium that receives a machine instruction as a machine-readable signal. The term "machine-readable signal" may refer to any signal through which the machine instructions and/or data are provided to the programmable processor.

To facilitate user interaction, the system and technique described herein may be implemented on a computer. The computer is provided with a display device (for example, a cathode ray tube (CRT) or liquid crystal display (LCD) monitor) for displaying information to a user, a keyboard and a pointing device (for example, a mouse or a track ball). The user may provide an input to the computer through the keyboard and the pointing device. Other kinds of devices may be provided for user interaction, for example, a feedback provided to the user may be any manner of sensory feedback (e.g., visual feedback, auditory feedback, or tactile feedback); and input from the user may be received by any means (including sound input, voice input, or tactile input).

The system and technique described herein may be implemented in a computing system that includes a back-end component (e.g., as a data server), or that includes a middleware component (e.g., an application server), or that includes a front-end component (e.g., a client computer having a graphical user interface or a Web browser through which a user can interact with an implementation of the system and technique), or any combination of such back-end, middleware, or front-end components. The components of the system can be interconnected by any form or medium of digital data communication (e.g., a communication network). Examples of communication networks include a local area network (LAN), a wide area network (WAN) and the Internet.

The computer system can include a client and a server. The client and server are generally remote from each other and typically interact through a communication network. The relationship of client and server arises by virtue of computer programs running on respective computers and having a client-server relationship to each other. According to the embodiments of the present disclosure, the Mahalanobis distance between the object detection box and the object tracking box is calculated in accordance with the modified predicted error covariance matrix, and the Mahalanobis distance is maintained within an appropriate range even when a movement state of the object changes dramatically. As a result, when performing a matching operation between the object detection box and the object tracking box in the current image in accordance with the Mahalanobis distance, it is able to enhance the robustness when tracking the object in different movement states.

It should be appreciated that, all forms of processes shown above may be used, and steps thereof may be reordered, added or deleted. For example, as long as expected results of the technical solutions of the present disclosure can be achieved, steps set forth in the present disclosure may be performed in parallel, performed sequentially, or performed in a different order, and there is no limitation in this regard.

The foregoing specific implementations constitute no limitation on the scope of the present disclosure. It is appreciated by those skilled in the art, various modifications, combinations, sub-combinations and replacements may be made according to design requirements and other factors. Any modifications, equivalent replacements and improvements made without deviating from the spirit and principle of the present disclosure shall be deemed as falling within the scope of the present disclosure.

**Claims**

1. An object tracking method, comprising:

   detecting an object in a current image, so as to obtain first information about an object detection box in the current image, the first information being used to indicate a first position and a first size;
   tracking the object through a Kalman filter, so as to obtain second information about an object tracking box in the current image, the second information being used to indicate a second position and a second size;
   performing fault-tolerant modification on a predicted error covariance matrix in the Kalman filter, so as to obtain a modified covariance matrix;
   calculating a Mahalanobis distance between the object detection box and the object tracking box in the current image in accordance with the first information, the second information and the modified covariance matrix; and
   performing a matching operation between the object detection box and the object tracking box in the current image in accordance with the Mahalanobis distance.

2. The object tracking method according to claim 1, wherein the calculating the Mahalanobis distance between the object detection box and the object tracking box in the current image in accordance with the first information, the second information and the modified covariance matrix comprises:

   calculating the Mahalanobis distance between the object detection box and the object tracking box in the current image through

$$D_{\mathrm{Mnew}}(X, \ \mu) = \sqrt{(X - \mu)^T (\Sigma + \alpha E)^{-1} (X - \mu)} \ ,$$

   where X represents the first information, $\mu$ represents the second information, $\Sigma$ represents the predicted error covariance matrix in the Kalman filter, ($\Sigma + \alpha E$) represents teh modified covariance matrix, $\alpha$ represents a predetermined coefficient greater than 0, and E represents a unit matrix.

3. The object tracking method according to claim 1, wherein the performing a matching operation between the object detection box and the object tracking box in the current image in accordance with the Mahalanobis distance comprises:

   when the Mahalanobis distance is smaller than or equal to a predetermined threshold, determining that the object detection box matches the object tracking box; or
   when the Mahalanobis distance is greater than the predetermined threshold, determining that the object detection box does not match the object tracking box.

4. The object tracking method according to claim 1, further comprising:

   obtaining a topological relation matrix $M_{T1}$ for the current image and a topological relation matrix $M_{T2}$ for a previous image of the current image;
   multiplying $M_{T1}$ by $M_{T2}$ on an element-by-element basis, so as to obtain a topological change matrix Mo; and
   modifying a matching result of the object detection box in the current image in accordance with $M_0$,
   wherein a value in an $i^{th}$ row and an $j^{th}$ column in $M_{T1}$ represents a front-and-back relationship between an $i^{th}$ object and a $j^{th}$ object in the current image, a value in an $i^{th}$ row and a $j^{th}$ column in $M_{T2}$ represents a front-and-back relationship between an $i^{th}$ object and a $j^{th}$ object in the previous image, and a value in an $i^{th}$ row and a $j^{th}$ column in $M_0$ represents whether the front-and-back relationship between the $i^{th}$ object and the $j^{th}$ object in the current image changes relative to the previous image.

5. The object tracking method according to claim 1, wherein subsequent to calculating the Mahalanobis distance between the object detection box and the object tracking box in the current image, the object tracking method further comprises:

calculating a distance similarity matrix $M_D$ in accordance with the Mahalanobis distance, a value in an $i^{th}$ row and a $j^{th}$ column in $M_D$ representing a distance similarity between an $i^{th}$ object tracking box and a $j^{th}$ object detection box in the current image;

calculating an appearance depth feature similarly matrix MA, a value in an $i^{th}$ row and a $j^{th}$ column in $M_A$ representing a cosine similarity between an appearance depth feature of the $i^{th}$ object tracking box in a previous image and an appearance depth feature of the $j^{th}$ object detection box; and

determining a similarity matching matrix in accordance with $M_D$ and MA,

wherein the performing a matching operation between the object detection box and the object tracking box in the current image in accordance with the Mahalanobis distance comprises: performing a matching operation between the object detection box and the object tracking box in the current image in accordance with the similarity matching matrix.

6. An object tracking device, comprising:

a detection module configured to detect an object in a current image, so as to obtain first information about an object detection box in the current image, the first information being used to indicate a first position and a first size;

a tracking module configured to track the object through Kalman filter, so as to obtain second information about an object tracking box in the current image, the second information being used to indicate a second position and a second size;

a modification module configured to perform fault-tolerant modification on a predicted error covariance matrix in the Kalman filter, so as to obtain a modified covariance matrix;

a first calculation module configured to calculate a Mahalanobis distance between the object detection box and the object tracking box in the current image in accordance with the first information, the second information and the modified covariance matrix; and

a matching module configured to perform matching on the object detection box and the object tracking box in the current image in accordance with the Mahalanobis distance.

7. The object tracking device according to claim 6, wherein the first calculation module is further configured to calculate the Mahalanobis distance between the object detection box and the object tracking box in the current image through

$$D_{\mathrm{Mnew}}(X,\ \mu) = \sqrt{(X-\mu)^T(\Sigma + \alpha E)^{-1}(X-\mu)}$$ , where X represents the first information, $\mu$ represents the second information, $\Sigma$ represents the predicted error covariance matrix in the Kalman filter, $(\Sigma + \alpha E)$ represents teh modified covariance matrix, $\alpha$ represents a predetermined coefficient greater than 0, and E represents a unit matrix.

8. The object tracking device according to claim 6, wherein the matching module is further configured to: when the Mahalanobis distance is smaller than or equal to a predetermined threshold, determine that the object detection box matches the object tracking box; or when the Mahalanobis distance is greater than the predetermined threshold, determine that the object detection box does not match the object tracking box.

9. The object tracking device according to claim 6, further comprising:

an obtaining module configured to obtain a topological relation matrix $M_{T1}$ for the current image and a topological relation matrix $M_{T2}$ for a previous image of the current image;

a second calculation module configured to multiply $M_{T1}$ by $M_{T2}$ on an element-by-element basis, so as to obtain a topological change matrix Mo; and

a processing module configured to modify a matching result of the object detection box in the current image in accordance with $M_0$,

wherein a value in an $i^{th}$ row and an $j^{th}$ column in $M_{T1}$ represents a front-and-back relationship between an $i^{th}$ object and a $j^{th}$ object in the current image, a value in an $i^{th}$ row and a $j^{th}$ column in $M_{T2}$ represents a front-and-back relationship between an $i^{th}$ object and a $j^{th}$ object in the previous image, and a value in an $i^{th}$ row and a $j^{th}$ column in $M_0$ represents whether the front-and-back relationship between the $i^{th}$ object and the $j^{th}$ object in the current image changes relative to the previous image.

**10.** The object tracking device according to claim 6, further comprising:

a third calculation module configured to calculate a distance similarity matrix $M_D$ in accordance with the Mahalanobis distance, a value in an $i^{th}$ row and a $j^{th}$ column in $M_D$ representing a distance similarity between an $i^{th}$ object tracking box and a $j^{th}$ object detection box in the current image;

a fourth calculation module configured to calculate an appearance depth feature similarly matrix MA, a value in an $i^{th}$ row and a $j^{th}$ column in $M_A$ representing a cosine similarity between an appearance depth feature of the $i^{th}$ object tracking box in a previous image and an appearance depth feature of the $j^{th}$ object detection box; and

a determination module configured to determine a similarity matching matrix in accordance with $M_D$ and $M_A$, wherein the matching module is further configured to perform matching on the object detection box and the object tracking box in the current image in accordance with the similarity matching matrix.

**11.** An electronic device, comprising at least one processor, and a memory in communication with the at least one processor, wherein the memory is configured to store therein an instruction to be executed by the at least one processor, and the instruction is executed by the at least one processor so as to implement the object tracking method according to any one of claims 1 to 5.

**12.** A non-transitory computer-readable storage medium storing therein a computer instruction, wherein the computer instruction is executed by a computer so as to implement the object tracking method according to any one of claims 1 to 5.

detecting an object in a current image, so as to obtain first information about an object detection box in the current image ⌐101

↓

tracking the object through a Kalman filter, so as to obtain second information about an object tracking box in the current image ⌐102

↓

performing fault-tolerant modification on a predicted error covariance matrix in the Kalman filter, so as to obtain a modified covariance matrix ⌐103

↓

calculating a Mahalanobis distance between the object detection box and the object tracking box in the current image in accordance with the first information, the second information and the modified covariance matrix ⌐104

↓

performing a matching operation between the object detection box and the object tracking box in the current image in accordance with the Mahalanobis distance ⌐105

**FIG. 1**

real-time video stream 21

extracting an image frame 22

obtaining an object detection box 23

obtaining an object tracking box 24

calculating a distance 25

performing matching operation 26

consistency constraint on a front-and-back topological relationship between image frames 27

terminating the calculation in a current image 28

**FIG. 2**

object tracking device 30

detection module 31

tracking module 32

modification module 33

first calculation module 34

matching module 35

**FIG. 3**

**FIG. 4**

| INTERNATIONAL SEARCH REPORT | International application No. |
|---|---|
| | **PCT/CN2020/117751** |

**A. CLASSIFICATION OF SUBJECT MATTER**

G06T 7/277(2017.01)i; G06T 7/246(2017.01)i; G06K 9/62(2006.01)i

According to International Patent Classification (IPC) or to both national classification and IPC

**B. FIELDS SEARCHED**

Minimum documentation searched (classification system followed by classification symbols)

G06T; G06K

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 目标, 跟踪, 检测, 当前, 帧, 图像, 卡尔曼, 预测, 容错, 错误, 修正, 马氏, 距离, 关联, 匹配, target, tracking, detection, current, frame, image, Kalman, prediction, fault, tolerant, correction, Mahalanobis, distance, association, matching

**C. DOCUMENTS CONSIDERED TO BE RELEVANT**

| Category* | Citation of document, with indication, where appropriate, of the relevant passages | Relevant to claim No. |
|---|---|---|
| PX | CN 111640140 A (BEIJING BAIDU NETCOM SCIENCE AND TECHNOLOGY CO., LTD.) 08 September 2020 (2020-09-08)<br>claims 1-12 | 1-12 |
| Y | CN 109816690 A (BEIJING FACEALL CO., LTD.) 28 May 2019 (2019-05-28)<br>description paragraphs [0024]-[0051], [0081]-[0083] | 1-12 |
| Y | CN 103281476 A (SUN YAT-SEN UNIVERSITY) 04 September 2013 (2013-09-04)<br>description, paragraphs [0027]-[0070] | 1-12 |
| Y | CN 109635657 A (PING AN TECHNOLOGY (SHENZHEN) CO., LTD.) 16 April 2019 (2019-04-16)<br>description, paragraphs [0004]-[0014] | 1-12 |
| A | CN 107516303 A (CHENGDU TOPPLUSVISION SCIENCE & TECHNOLOGY CO., LTD.) 26 December 2017 (2017-12-26)<br>entire document | 1-12 |
| A | US 2015055829 A1 (LIANG, Lingyan) 26 February 2015 (2015-02-26)<br>entire document | 1-12 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 February 2021** | **23 February 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/117751**

| Patent document cited in search report | | | Publication date (day/month/year) | Patent family member(s) | | | Publication date (day/month/year) |
|---|---|---|---|---|---|---|---|
| CN | 111640140 | A | 08 September 2020 | None | | | |
| CN | 109816690 | A | 28 May 2019 | None | | | |
| CN | 103281476 | A | 04 September 2013 | None | | | |
| CN | 109635657 | A | 16 April 2019 | WO | 2020098076 | A1 | 22 May 2020 |
| CN | 107516303 | A | 26 December 2017 | None | | | |
| US | 2015055829 | A1 | 26 February 2015 | JP | 2015041383 | A | 02 March 2015 |
| | | | | CN | 104424634 | A | 18 March 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010443892